# EUROPÄISCHE PATENTSCHRIFT

(11) **EP 1 097 833 B1**
(45) Veröffentlichungstag und Bekanntmachung des Hinweises auf die Patenterteilung: **10.08.2005**
(21) Anmeldenummer: 00123114.1
(22) Anmeldetag: 25.10.2000
(51) Int. Cl.: B60K 41/02, F16D 48/06

(54) **Verfahren zur Ermittlung des Tastpunktes einer automatisch betätigten Reibungskupplung im Antriebsstrang eines Kraftfahrzeuges mit Verbrennungsmotor**
Method of determining the touch point of an automatically actuated friction clutch in the drive train of a motor vehicle with combustion engine
Méthode de détermination du point de contact d'un embrayage à friction actué automatiquement dans l'arbre de traction d'une automobile à moteur à combustion

(30) Priorität: 03.11.1999 DE 19952862
(43) Veröffentlichungstag der Anmeldung: 09.05.2001
(73) Patentinhaber: ADAM OPEL AG, 65423 Rüsselsheim (DE)
(72) Erfinder: Klösel, Rainer, 63225 Langen (DE); Hangen, Götz, 55578 Wolfsheim (DE)
(74) Vertreter: Daniel, Ulrich W.P.

(56) Entgegenhaltungen:
- EP-A- 0 392 762
- DE-A- 4 140 328
- DE-A- 19 915 207

## Beschreibung

Die Erfindung betrifft ein Verfahren zur Ermittlung des Tastpunktes einer automatisch betätigten Reibungskupplung im Antriebsstrang eines mit einem Verbrennungsmotor angetriebenen Kraftfahrzeuges gemäß dem Oberbegriff des Patentanspruches.

Als Tastpunkt wird hier der Beginn des Eingriffsvorganges der Kupplung verstanden. Die Ermittlung des Tastpunktes ist insbesondere von Bedeutung für die Steuerung einer Kupplung bei einem automatisierten Schaltgetriebe.

Ein gattungsgemäßes Verfahren ist z. B. mit EP 0 392 762 B1 beschrieben. Bei diesem bekannten Verfahren wird die Leerlaufdrehzahl der Brennkraftmaschine überwacht, und bei einem signifikanten Abfall der Leerlaufdrehzahl in Folge des von der Kupplung bei Beginn des Eingriffs übertragenen Drehmomentes wird auf den Tastpunkt geschlossen.

Nachteilig ist, dass zum sicheren Erkennen des Tastpunktes ein relativ großes Drehmoment auftreten muss. Dies führt am Motor regelmäßig zu einem Drehzahleinbruch, der als störende Vibration vom Fahrer wahrgenommen wird.

Es ist weiterhin bekannt, den Tastpunkt durch Beobachtung der Kupplungsabtriebsdrehzahl bzw. einer Getriebeeingangsdrehzahl zu ermitteln. Bei Erreichen des Tastpunktes der Kupplung wird die Getriebeeingangswelle beschleunigt. Aus dem Wert dieser Beschleunigung kann auf den Tastpunkt geschlossen werden.

Bei dieser Methode ist eine zusätzliche Sensorik für die Drehzahlerfassung am Kupplungsabtrieb bzw. am Getriebeeingang sowie eine Auswertung dieser sensierten Drehzahl in der Steuerelektronik des Kupplungsstellers oder im Steuergerät des Getriebes erforderlich.

Der Erfindung liegt die Aufgabe zugrunde, ein Verfahren zum Ermitteln des Tastpunktes einer automatisch betätigten Reibungskupplung im Antriebsstrang eines mit einem Verbrennungsmotor angetriebenen Kraftfahrzeuges zu schaffen, bei dem ohne den Aufwand einer zusätzlichen Sensorik und ohne spürbaren Drehzahleinbruch des Motors der Tastpunkt sicher erkannt wird.

Die Erfindung löst diese Aufgabe mit den Merkmalen des Patentanspruches, indem über einen ohnehin vorhandenen Leerlaufschalter der Leerlaufzustand des Motors und über die übliche Sensorik eines Getriebesteuergerätes der Stillstand des Fahrzeuges sowie ein eingelegter Fahrgang erkannt werden. Bei diesem Zustand wird in bekannter Weise der Verbrennungsmotor durch einen Leerlaufsteller auf einer konstanten Leerlaufdrehzahl gehalten. Von außen auftretende Störgrößen, z. B. in Folge eines an der Kupplung anliegenden Drehmomentes, werden vom Leerlaufsteller durch eine Veränderung der Zuführung der Luftmasse zum Motor ausgeglichen. Gemäß der Erfindung wird bei einem signifikanten Anstieg der Luftmasse darauf geschlossen, dass die Kupplung den Tastpunkt erreicht hat.

Da die in der elektronischen Motorsteuerung interne Regelgröße "Luftmasse" deutlich schneller reagiert als das ausgegebene Motordrehmoment, welches zur Korrektur der Motordrehzahl führt, wird auch der Drehzahleinbruch des Motors bei Eintreten des Tastpunktes kleiner, und die störenden Vibrationen sind deutlich geringer.

Ein zusätzlicher Aufwand von Sensoren, z. B. zur Erfassung von Drehzahlen an der Getriebeeingangswelle, und eine Auswertung dieser Drehzahlerfassung in einem Steuergerät ist damit nicht erforderlich.

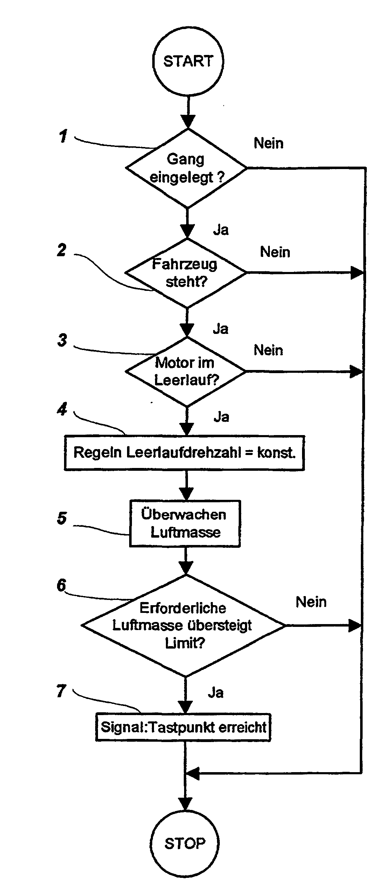

Die Zeichnung zeigt in ihrer einzigen Figur ein Flussdiagramm eines Ausführungsbeispiels des erfindungsgemäßen Verfahrens.

Im Getriebesteuergerät wird gemäß Block 1 geprüft, ob ein Fahrgang eingelegt ist und, falls dies der Fall ist, gemäß Block 2 ob das Fahrzeug stillsteht oder rollt. Die elektronische Motorsteuerung erkennt gemäß Block 3, ob der Verbrennungsmotor im Leerlauf arbeitet. Ist kein Fahrgang eingelegt oder rollt das Fahrzeug oder läuft der Motor nicht im Leerlauf, dann ist der Tastpunkt für die Kupplung unkritisch.

Die elektronische Motorsteuerung regelt in an sich bekannter Weise gemäß Block 4 die Leerlaufdrehzahl, in dem sie Abweichungen erkennt und diese über den Leerlaufsteller durch Verändern der dem Motor zugeführten Luftmasse ausgleicht. Die zugeführte Luftmasse wird nach der Erfindung gemäß Block 5 stetig überwacht. Wird nun bei an sich gleichbleibender Leerlaufdrehzahl gemäß Block 6 erkannt, dass die erforderliche Luftmasse zur Aufrechterhaltung dieser Leerlaufdrehzahl ein vorgegebenes Limit übersteigt, dann ist dies ein Indiz dafür, dass am Motorausgang ein erhöhtes Moment anliegt, also am Kupplungsstellerweg der Tastpunkt der Kupplung erreicht ist. Das Signal "Tastpunkt erreicht" wird gemäß Block 7 gesetzt.

Es besteht außerdem die Möglichkeit, dass die Steuerelektronik des Kupplungsstellers dem Motorsteuergerät vor einer Regelung der Leerlaufdrehzahl nach Block 4 mitteilt, dass eine Tastpunktadaption geplant ist, so dass das Motorsteuergerät in Bereitschaft ist und andere Verbraucher, welche die Leerlaufregelung beeinflussen, (z. B. Klimaanlage) keinen negativen Einfluss auf das Verfahren haben.

## Patentansprüche

1. Verfahren zur Ermittlung des Tastpunktes einer automatisch betätigten Reibungskupplung im Antriebsstrang eines mit Verbrennungsmotor angetriebenen Kraftfahrzeuges, wobei ein Kupplungssteller von einer Steuerelektronik ansteuerbar ist, der Verbrennungsmotor eine elektronische Motorsteuerung sowie einen von dieser beeinflussten Leerlaufsteller aufweist, welcher die Leerlaufdrehzahl durch Verändern der dem Motor zugeführten Luftmasse konstant hält und ein Getriebe von einem elektronischen Getriebesteuergerät beeinflusst ist, **dadurch gekennzeichnet, dass** bei eingelegtem Fahrgang (1), stillstehendem Fahrzeug (2) und bei erkanntem Leerlauf (3) die dem Verbrennungsmotor zugeführte Luftmasse überwacht wird (5) und bei Erkennen einer Überschreitung einer vorgegebenen Grenzmenge der Luftmasse (6) ein Signal generiert wird (7), welches das Erreichen des Tastpunktes anzeigt.

## Claims

1. A method for the determination of the point of engagement of an automatically actuated friction clutch in the drive train of a motor vehicle propelled by an internal combustion engine, wherein a clutch actuator is controllable by an electronic control system, the internal combustion engine comprises an electronic engine control unit and an idling speed adjusting device which is controlled thereby and maintains the idling speed constant by altering the quantity of air supplied to the engine and a gear unit which is controlled by an electronic gear control device, **characterized in that** in the case of an engaged drive gear (1), a stationary vehicle (2) and detected idling (3), the quantity of air supplied to the internal combustion engine is monitored (5) and in the event that it is detected that the quantity of air exceeds a given limiting amount (6) then a signal is generated (7) which indicates that the point of engagement has been reached.

## Revendications

1. Procédé de détermination du point de contact d'un embrayage à friction actionné automatiquement dans la chaîne de traction d'un véhicule automobile entraîné par un moteur à combustion, dans lequel un actionneur d'embrayage est susceptible d'être actionné par une électronique de commande, le moteur à combustion comporte une commande électronique de moteur et un actionneur de marche au ralenti influencé par celle-ci, qui maintient constant le régime de ralenti par variation de la masse d'air amenée au moteur et dans lequel une boîte de vitesses est influencée par un appareil électronique de commande de boîte de vitesses, **caractérisé en ce que**, avec une vitesse enclenchée ou engagée (1), avec un véhicule à l'arrêt (2) et avec une marche au ralenti détectée (3), la masse d'air amenée au moteur à combustion est surveillée (5) et, lors d'une détection d'un dépassement d'une quantité limite prédéfinie de la masse d'air (6), un signal est généré (7), qui indique que le point de contact est atteint.
